# EUROPEAN PATENT APPLICATION

(11) **EP 1 710 455 A1**
(43) Date of publication of application: **11.10.2006**
(21) Application number: 06251410.4
(22) Date of filing: 16.03.2006
(51) Int. Cl.: F16B 31/02, F16B 25/00

(54) **Self-drilling screw for use with steel sheets**

(30) Priority: 08.04.2005 JP 2005111783
(71) Applicant: Shinjo MFG. Co., Ltd., Osaka-shi, Osaka 557-0034 (JP)
(72) Inventor: Shinjo, Katsumi, Nishinari-ku, Osaka (JP)
(74) Representative: Turner, James Arthur

(57) **Abstract**

The main body (2) of a self-drilling screw has a driven head (9) having at its top central region a weld lug (10) of a prescribed size. The screw also has a discrete drive head (3) having in its top a hole (11) for engagement with a driving tool. A thinned stud (12) continuing from the drive head (3) is resistance welded to the top center of driven head (9), using the weld lug (10) to form between these heads a torque-limiting junction (13) ready to break at a prescribed torque. As the main body (2) of the screw for use with thin steel sheets is tightened, the drive head (3) will be removed due to breakage of the junction (13). Any excessive tightening torque imparted to the screw will not break a female-threaded hole formed in the steel sheet, but firmly retaining the screw on it.

## Description

The present invention relates to a self-drilling screw for use with steel sheets.

Self-drilling screws can automatically be fastened through any metal sheets simultaneously with the drilling of holes through said sheets. Certain colored and corrugated steel sheets used as the roofs and/or walls in considerably large buildings can conveniently be fixed in position by using a number of such self-drilling screws. Those thin colored steel sheets are in usual cases merely about 1.0 *mm* thick, and in other cases still thinner for example to be 0.7 *mm* thick.

There has been a strong demand for the technique such that any necessary attachments or the like be fixed to thin steel sheets with use of self-drilling screws. Such screws should penetrate the steel sheet through holes preliminarily formed therein, and this technique is already practiced in some cases on a considerable scale.

A female thread that will be formed by any conventional self-drilling screw through such a thin and single steel sheet is inevitably of a poor strength insufficient to fix the attachments or the like. Any unskilled operations of a worker, his or her incorrect choice or improper adjustment of an electric driving tool for use are likely to cause an excessively strong tightening torque. Consequently, many troubles have occurred such that the female-threaded holes would be broken disabling the fixing of such attachments.

The present inventor had already made a proposal such that combination of a single thin steel sheet with a self-drilling screw could be improved to enhance retention thereof (see the Patent Document 1).

However, this proposal on the self-drilling screw and the advanced manner of its fixing has not proved satisfactory. Any worker's unskilled operations, incorrect choice of electric tool or improper torque adjustment thereof do cause troubles, such that an excessively strong tightening torque would bring about breakage of the female-threaded holes.

Patent Document 1: Japanese Patent Publication No. Hei.8-11965

Embodiments of the present invention, made in view of the problems mentioned above, can provide a further advanced type of the self-drilling screw, starting from that disclosed in Patent Document 1. An embodiment of present self-drilling screw must have a capability of automatically regulating or limiting its tightening torque in order to surely protect the female-threaded holes from breakage, affording a strong retention of this screw on a thin steel sheet.

Various respective aspects and features of the invention are defined in the appended claims. Features from the dependent claims may be combined with features of the independent claims as appropriate and not merely as explicitly set out in the claims.

Embodiments of the present invention relate to a self-drilling screw adapted for use to secure any articles, fittings or the like to a steel sheet that serves as the support for said article and has a thickness of about 1.0 *mm* or less.

In an embodiment of the present invention a self-drilling screw for use with relatively thin steel sheets may comprise a threaded shank composed of a parallel portion and conical portion continuing therefrom. This screw further comprises a piercing portion disposed at and integral with the free end of the conical portion that extends to one of opposite ends of the threaded shank, as well as a driven head continuing from the other end of said shank away from the parallel portion thereof. The present screw is characterized in that a discrete drive head has in a top thereof a hole for engagement with a driving tool, and a thinned stud integrally protrudes from a bottom of the drive head. The stud has a bottom end resistance welded to a top central region of the driven head so as to form between the drive and driven heads a torque-limiting junction ready to break at a prescribed tightening torque.

The resistance welding may be effected making use of a weld lug of a prescribed size and protruding either from the central region of the driven head top, or alternatively protruding from a free end face of the thinned stud. In any case, such a weld lug will be molten and then solidified to fusion bond the drive head to the driven head, so as to provide the torque-limiting junction between these heads. Also alternatively, the weld lug may be replaced with a conical weld lug protruding from the bottom end of the thinned stud continuing from the drive head. In this case, the conical lug will melt to assume a size or to have a volume corresponding to the prescribed size when resistance welded to the driven head, also providing the torque-limiting junction between the drive and driven heads.

If the present self-drilling screw is required to be highly resistant to corrosion, then its parallel portion of threaded shank and its driven head may preferably be made of a proper austenitic stainless steel. In this case, the conical portion of the threaded shank as well as an adjacent region of parallel portion and the piercing portion are desirably made of a high-carbon steel or an alloy steel and hardened by the quenching method.

Alternatively, the self-drilling screw may be formed at first of a low-carbon steel in its entirety, and hardened by cementation (viz., carbonizing) before finally plated to be covered with a corrosion resistant surface layer.

In use, in an embodiment of the present invention a driving tool will be engaged with the drive head so as to rotate the threaded shank, causing the piercing portion at the free end thereof to punch a relatively small hole in a steel sheet. As a result, the conical portion of said shank will expand the rim of this small hole into a funnel-shape in the burring manner. Thus, the thread of the shank will be forced into engagement with such an expanded rim of the hole, to thereby affording a firm retention of this screw. If the flank angle of the thread facing the driven head is considerably sharpened to be about 10° or less (as compared with the usual angle of 30°), then the retention will be enhanced further.

As the driven head is forcibly rotated to fasten any attachment to the steel sheet, its torque will reach a prescribed limit of tightening torque so as to break the junction. Thus, any excessive torque will no longer be imparted to the steel sheet around the hole, thereby protecting it from breakage and ensuring a firm retention of the screw therein. The prescribed limited torque may easily be adjusted by changing the dimension, that is diameter and height, of the weld lug.

As noted above, the colored steel sheets used as the roofs and walls of buildings are always exposed to wind and rain. Therefore, the drilling screws used to secure such steel sheets are required to be highly resistant to corrosion. In view of such a circumstance, both the parallel portion of shank and the driven head of the present screw are preferably be formed of a corrosion-resistant austenitic stainless steel. The conical portion of the shank, the adjacent region of parallel portion and the piercing portion may preferably be formed of a high-carbon steel or alloy steel. Prior to a final and selective high-frequency process for hardening these portions, the conical portion will be welded previously to the end of threaded shank parallel portion.

When the self-drilling screw of the invention is tightened, any unskilled operations, or any error in selection or torque-adjustment of the driving tool, will no longer cause an excessive fastening torque. Any desired attachments can now be rigidly fixed on the thin steel sheets, with a proper tightening force.

It is easy for the junction of drive head to have a reliable and unvaried breaking torque. For this purpose, the size of semispherical weld lug disposed either at the top center of driven head or on the thin stud bottom may be adjusted. Alternatively, the molten volume of conical weld lug formed on said stud bottom may be adjusted.

A newly exposed surface of the broken junction is much smaller than the driven head, and a zinc plating covering the driven head is ready to undergo a sacrificial anodic oxidation so as to protect such a small exposed surface. Thus, the broken junction will never impair the appearance of the screw head fixed on the steel sheet.

In accordance with the accompanying claim 5, the present self-drilling screw can be rendered highly resistant to corrosion.

The invention will now be described by way of example with reference to the accompanying drawings, throughout which like parts are referred to by like references, and in which:
Fig. 1 is a front elevation of a self-drilling screw provided for use with thin steel sheets in accordance with an embodiment of the present invention;
Fig. 2 is a plan view of the screw shown in Fig. 1;
Fig. 3 is a front elevation of a main body of the screw also shown in Fig. 1;
Fig. 4 is a cross-sectional front elevation of a drive head to be integrated with the main body of the screw shown in Fig. 1;
Fig. 5 is a fragmentary and enlarged cross section of a thread formed around the shank of screw main body shown in Fig. 1;
Fig. 6 is a front elevation of the self-drilling screw for steel sheets, with the screw being shown in use and partly in cross section;
Fig. 7 is a front elevation of the self-drilling screw modified in another embodiment to have a main body and a drive head as shown in this figure; and
Fig. 8 is a front elevation of the drive head provided in still another embodiment.

Now some embodiments of the present invention will be described referring to the accompanying drawings.

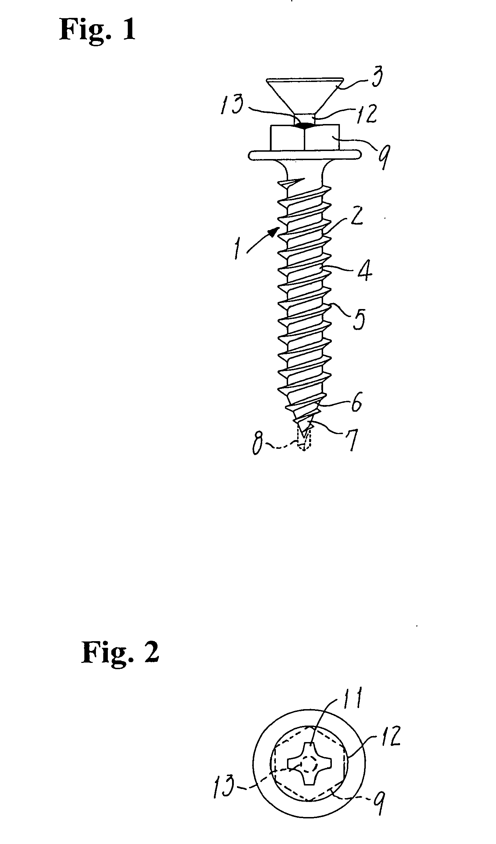

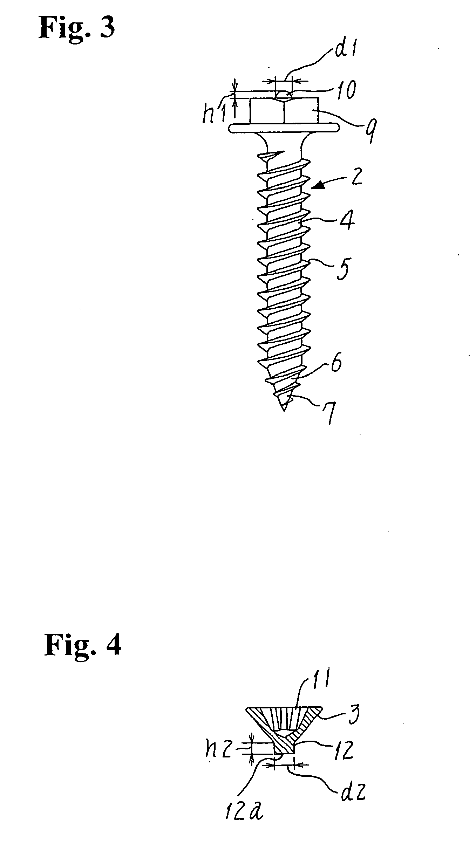

Figs. 1 and 2 show a self-drilling screw in its entirety for use with thin steel sheets. This screw I is composed of a main body 2 shown in Fig. 3 and a drive head 3 shown in Fig. 4 and resistance welded to the main body 2.

A threaded shank 4 of the screw main body 2 is composed of a parallel portion 5 and a conical portion 6 continuing therefrom. The main body 2 further comprises a drill bit 7 as the piercing portion, but as indicated by the phantom lines in Fig. 1 a thin drill 8 may substitute for the drill bit 7. Formed at the other end of threaded shank 4 is a driven head 9 with a weld lug 10 of a prescribed size and protruding from the top center of this head. The weld lug is of a semispherical shape having a prescribed diameter 'd1' and height 'h1' such as to define a breaking torque withstanding the boring and screwing action of main body 2. The screw main body 2 may preliminarily be formed of a low-carbon steel by the pressing method, before cementation hardening and anti-corrosion plating processes. In a case wherein an especially high resistance to corrosion is required, the parallel portion5 of threaded shank and the driven head 9 may be formed of a highly corrosion-resistant austenitic steel. In this case, the conical portion 6 of threaded shank and an adjacent region of parallel portion adjoining the conical portion as well as the drill bit 7 or thin drill 8 are formed of a high-carbon steel or alloy steel. These portions are then selectively hardened by high-frequency irradiation, before welded to the remaining region of said parallel portion.

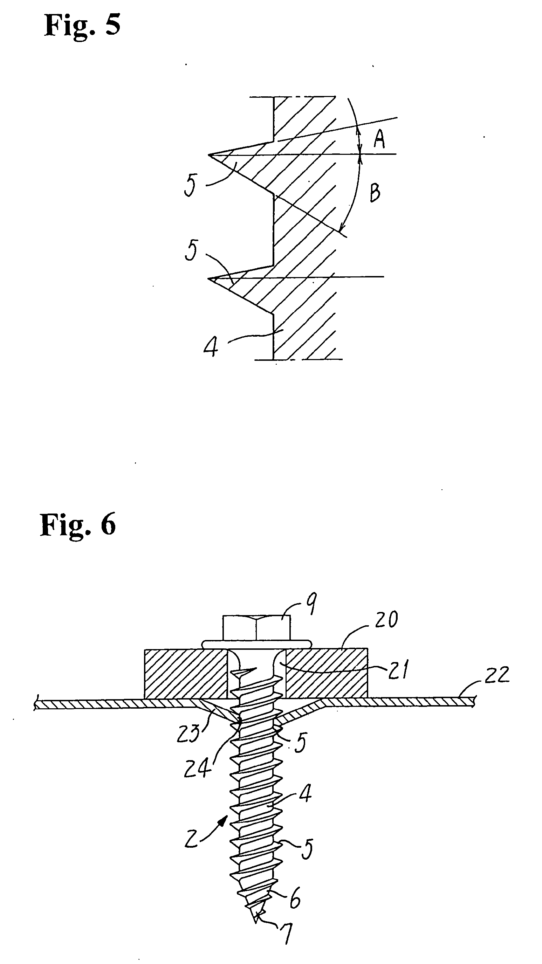

As shown in Fig. 5, the parallel portion 5 of shank 4 has a flank angle 'A' of 10° or less facing the driven head 9. This feature enhances the anti-separation strength of the screw against a thrust applied thereto away from the steel sheet when the screw is tightened. The other flank angle 'B' of the drill bit 7 or thin drill 8 is designed to be 30° as usual in ordinary screw threads.

As seen in Fig. 4, the top of a discrete drive head 3 has a recess 11 for engagement with a driving tool (not shown), and comprises a thinned stud 12 continuing from the bottom of this head 3. In order to surely weld the end face 12a of stud 12 to the weld lug 10, this stud has a diameter 'd2' equal to or slightly larger than 'd1' of weld lug 10, and a height 'h2' longer than that 'h1' of the weld lug. Such a dimension of the thinned stud 12 will contribute to render constant the molten amount of weld lug 10, thus affording an unvaried breaking torque to junctions 13 thus formed. The drive head 3 may be made by the pressing of a low-carbon steel.

The end face 12a of thinned stud 12 will be pressed against the weld lug 10 when resistance welding them together. As a result, the drive head 3 is bonded to the top center of driven head 9, to become coaxial therewith as seen in Fig. 1. The junction 13 formed in this manner at the welded region is ready to be broken at a prescribed tightening torque in use of this self-drilling screw.

Fig. 6 show one mode of using the present screw 1 of the described structure, wherein an attachment 20 is fixed on a steel sheet 22 having a thickness of 0.8 *mm.* In operation, the screw main body 2 will be inserted in and through a hole previously formed in the attachment 20 so that the drill bit 7 is forced to bear against the sheet 22. Then, a driving tool (not shown) will be fitted in the recess 11 of drive head 3 so as to rotate the threaded shank 4 relative to the steel sheet 22, thereby forming a small hole in this sheet. Subsequently, the conical portion 6 of threaded shank will tap this hole while expanding it into a funnel shape by the burring manner. The thus enlarged rim 24 (with a partial female thread) will function to preliminarily retain the parallel portion 5 of threaded shank. Further tightening of the shank 4 will cause the driven head 9 to press the attachment 20 as seen in Fig. 6, until the torque reaches a prescribed limit to break the junction 13 and remove the drive head 3. Any excessive torque will not be applied to damage the female-threaded rim of hole 24, but affording a strong retention of the screw at its parallel portion 5 held ion this hole. The thread of parallel portion 5 engaging such a rim has the flank angle 'A' of 10° or less facing the driven head 9 as noted above. By virtue of this feature, a tensile resistance of shank 4 being pulled away from the steel sheet is further enhanced for much surer retention of this screw.

Thanks to the burring effect of conical portion 6 of shank, this screw 1 secured to the steel sheet 0.8 *mm* thick did prove resistant by 200 kg-f or more to pulling separation.

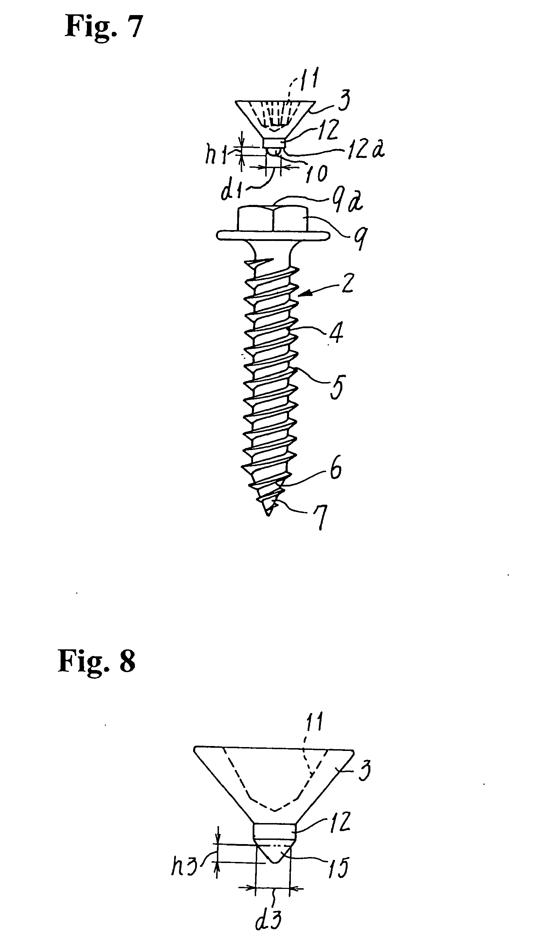

Fig. 7 shows another embodiment, in which a semispherical weld lug 10 having a diameter 'd1' and height 'h1' is formed the end face 12a of the thinned stud 12. This lug 10 will be pressed against the top center 9a of driven head 9 while resistance welding is conducted to fusion bond the stud 12 of drive head 3 to this center 9a. A resultant junction 13 thus appearing in the welded region is of a torque limiting nature similarly to that shown in Fig. 1.

Fig. 8 shows still another embodiment, in which a conical lug 15 is formed in the end face of thinned stud 12 of the drive head 3. This lug 15 will likewise be pressed against the top center of driven head 9 while resistance welding is conducted to fusion bond the stud 12 to this center. The diameter 'd3' and height 'h3' will be designed such that a molten mass of this lug 15 corresponds to that which the weld lug 10 will produce in the foregoing embodiments. A resultant junction 13 thus appearing in the welded region is of a torque limiting nature similarly to that shown in Fig. 1.

As will be seen in the drawings illustrating the present invention, the diameter 'd2' of thinned stud (12) may preferably and typically be about a half of the diameter of threaded shank (4).

## Claims

1. A self-drilling screw for use with steel sheets comprising: a threaded shank (4) composed of a parallel portion (5) and a conical portion (6) continuing therefrom, a piercing portion (7) disposed at and integral with a free end of the conical portion (6) that extends to one of opposite ends of the threaded shank (4), and a driven head (9) continuing from the other end of said shank away from the parallel portion (5) thereof,
**characterized in that** a discrete drive head (3) having in a top thereof a hole (11) for engagement with a driving tool and a thinned stud (12) integral with and protruding from a bottom of the drive head (3), and the stud has a bottom end resistance welded to a top central region of the driven head (9) so as to form between the drive and driven heads (3, 9) a torque-limiting junction (13) ready to break at a prescribed tightening torque.

2. A self-drilling screw as defined in claim 1, **characterized in that** a weld lug (10) of a prescribed size protrudes from the top central region of the driven head (9), and the weld lug is pressed against the bottom end of the stud (12) and molten and then solidified to bond the drive head (3) to the driven head (9), so as to provide the torque-limiting junction (13) between the drive and driven heads (3, 9).

3. A self-drilling screw as defined in claim 1, **characterized in that** a weld lug (10) of a prescribed size protrudes from the bottom end of the thinned stud (12), and the weld lug is pressed against the top central region of the driven head (9), molten and then solidified to bond the drive head (3) to the driven head (9), so as to provide the torque-limiting junction (13) between the drive and driven heads (3, 9).

4. A self-drilling screw as defined in claim 1, **characterized in that** a conical weld lug (15) protrudes from the bottom end of the thinned stud (12), and the conical lug is pressed against the top central region of the driven head (9), and molten to have a volume corresponding to the prescribed size when resistance welded to the driven head, also providing the torque-limiting junction (13) between the drive and driven heads (3, 9).

5. A self-drilling screw as defined in any of the preceding claims 1 to 4, wherein the parallel portion (5) of threaded shank and the driven head (9) are made of an austenitic stainless steel.

6. A self-drilling screw as defined in claim 5, wherein the conical portion (6) of the threaded shank as well as an adjacent region of parallel portion (5) and the piercing portion (7) are made of a high-carbon steel and hardened by the quenching method.

7. A self-drilling screw as defined in claim 5, wherein the conical portion (6) of the threaded shank as well as an adjacent region of parallel portion (5) and the piercing portion (7) are made of an alloy steel and hardened by the quenching method.

8. A self-drilling screw as defined in any of the preceding claims 1 to 4, wherein the self-drilling screw is formed of a low-carbon steel in its entirety, and hardened by cementation before finally plated to be covered with a corrosion resistant surface layer.
